# EUROPEAN PATENT SPECIFICATION

(11) **EP 4 187 416 B1**
(45) Date of publication and mention of the grant of the patent: **28.01.2026**
(21) Application number: 21210159.6
(22) Date of filing: 24.11.2021
(51) Int. Cl.: G06F 21/52

(54) **METHOD AND APPARATUS FOR PROTECTING A COMPUTING DEVICE CONNECTED TO A NETWORK**
VERFAHREN UND VORRICHTUNG ZUM SCHUTZ EINER MIT EINEM NETZWERK VERBUNDENEN RECHENVORRICHTUNG
PROCÉDÉ ET APPAREIL DE PROTECTION D'UN DISPOSITIF INFORMATIQUE CONNECTÉ À UN RÉSEAU

(43) Date of publication of application: 31.05.2023
(73) Proprietor: Montimage, 75013 Paris (FR)
(72) Inventor: MONTES DE OCA, Edgardo, 75013 PARIS (FR)
(74) Representative: Santarelli

(56) References cited:
- FRANK C LIN ET AL: "Preventing Outgoing Spam by Monitoring User Interactions", PERVASIVE COMPUTING AND APPLICATIONS, 2006 1ST INTERNATIONAL SYMPOSIUM ON, IEEE, PI, 1 August 2006 (2006-08-01), pages 847 - 850, XP031014550, ISBN: 978-1-4244-0325-7
- BACHAR WEHBI ET AL: "Events-Based Security Monitoring Using MMT Tool", SOFTWARE TESTING, VERIFICATION AND VALIDATION (ICST), 2012 IEEE FIFTH INTERNATIONAL CONFERENCE ON, IEEE, 17 April 2012 (2012-04-17), pages 860 - 863, XP032182826, ISBN: 978-1-4577-1906-6, DOI: 10.1109/ICST.2012.188

## Description

### FIELD OF THE INVENTION

The present disclosure concerns the domain of computer security and more particularly a method and a device for filtering network activity coming in and going out of a computing device.

### BACKGROUND OF INVENTION

Detecting abnormal or malicious network activity is very challenging. Today, the most often used techniques are based on the detection of known attacks using signatures and behaviour anomalies (e.g., as done by Intrusion Detection Systems) but 0-day and Advanced Persistent Threats (APT) are not sufficiently detected by these existing techniques. Solutions currently available in the market or in research involve the analysis of network traffic, email content and downloaded files to identify malicious activity and behaviour, viruses and malware. For the most part, they depend on known threats that should be blocked but show insufficient result, in particular when facing unknown threats. In this context, improved method of detecting and blocking malicious network traffic would be advantageous.

NPL document "Preventing Outgoing Spam by Monitoring User Interactions", by FRANK C LIN ET AL, in 1ST INTERNATIONAL SYMPOSIUM ON, IEEE PERVASIVE COMPUTING AND APPLICATIONS, 2006 discloses an e-mail filtering system using the results from monitoring user interactions to derive the message intentability of outgoing messages.

NPL document "Events-Based Security Monitoring Using MMT Tool" by BACHAR WEHBI ET AL in IEEE FIFTH INTERNATIONAL CONFERENCE ON SOFTWARE TESTING, VERIFICATION AND VALIDATION (ICST), 2012, discloses a system that analyses and correlates network and application events to detect operational and security incidents.

### SUMMARY OF THE INVENTION

The present invention has been devised to address one or more of the foregoing concerns.

According to a first aspect of the invention there is provided a method of filtering network traffic as set out in claim 1.

In an embodiment, analysing user activity continuously comprises:
- capturing user activity by a User Logger component; and
- analysing the captured user activity by a User Analyser component.

In an embodiment, the verdict is determined by an Event Correlation Engine component based on the detected network events and the system, application, and user activity analysis.

In an embodiment, the Event Correlation Engine component is based on a set of correlation rules.

In an embodiment, the correlations rules are based on linear temporal logic.

In an embodiment, the correlation rules can be generated automatically using a correlation rule generator.

According to another aspect of the invention there is provided a computer program product for a programmable apparatus, the computer program product comprising a sequence of instructions for implementing a method according to the invention, when loaded into and executed by the programmable apparatus.

According to another aspect of the invention there is provided a computer-readable storage medium storing instructions of a computer program for implementing a method according to the invention.

According to another aspect of the invention there is provided a device as set out in claim 9.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible, non-transitory carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Embodiments of the invention are now described, by way of example only, and with reference to the following drawings in which:
**Figure 1** illustrates a high-level architecture of an embodiment of the invention;
**Figure 2** illustrates a high-level architecture of another embodiment of the invention;
**Figure 3** illustrates a more detailed architecture of an embodiment of the invention;
**Figure 4** illustrates a detailed view of an advanced network firewall according to an embodiment of the invention;
**Figure 5** illustrates an example of flowchart of a method for filtering network traffic by an advanced network firewall in an embodiment of the invention;
**Figure 6** illustrates the architecture of a DPI/DFI (Deep Packet Inspection / Deep Flow Inspection) analyser in an embodiment of the invention;
**Figure 7** illustrates an example of flowchart of a method for analysing network traffic by a DPI/DFI analyser;
**Figure 8** illustrates the architecture of an event correlation engine in an embodiment of the invention;
**Figure 9** illustrates an example of flowchart of a method for determining activities provoking a network event by an event correlation engine;
**Figure 10** illustrates an example of flowchart of a method for analysing user activities by a user logger and user analyser;
**Figure 11** illustrates an example of flowchart of a method for analysing system activities by a system logger and a system analyser;
**Figure 12** illustrates an example of flowchart of a method for analysing application activities by an application logger and an application analyser;
**Figure 13** illustrates an example of general ordered tree representing a correlation rule in an embodiment of the invention;
**Figure 14** illustrates the architecture of correlation rule generator in an embodiment of the invention;
**Figure 15** illustrates an example of flowchart of a method for deriving rules by a correlation rule generator;
**Figure 16** illustrates a schematic block diagram of a computing device for implementation of one or more embodiments of the invention.

### DETAILED DESCRIPTION OF THE INVENTION

A general goal of the invention is to improve methods for detecting and/or blocking malicious network traffic by using user action analysis to help in detecting the legitimate network events from suspicious ones. In an embodiment, a service referred as Advanced Persistent Security (APS), links the human user and system activity on a User Equipment (UE) with the network activity going through the network interfaces (NICs - Network Interface Cards) of the UE. The reason for this is to determine what activity has been triggered or authorised directly or indirectly by the User and what activity has not. This information is needed to block all unwanted activity that could represent cyber-attacks (e.g., known attacks, 0-day attacks or Advanced Persistent Threats) or just unnecessary network traffic (i.e., noise).

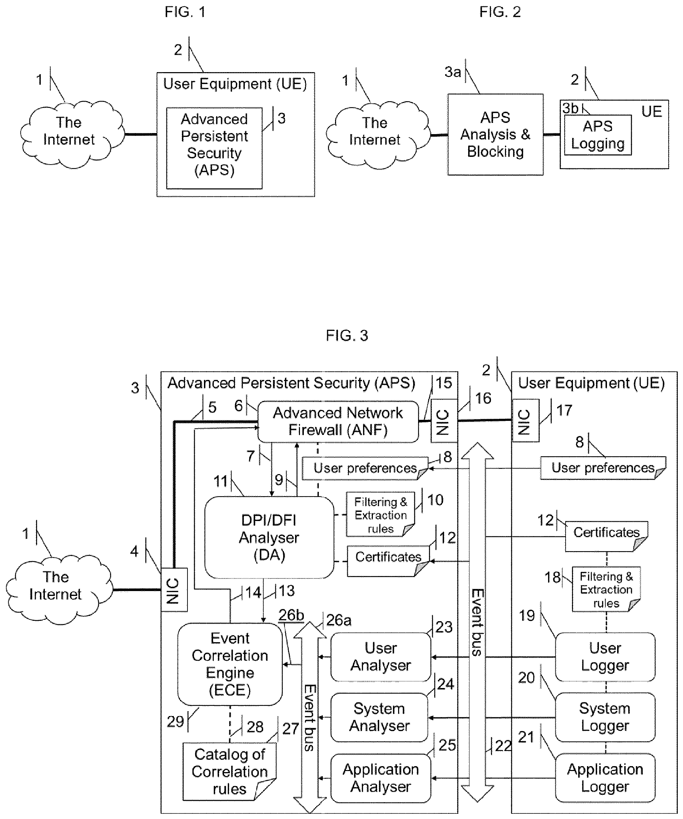

**Figure 1** illustrates a high-level architecture of an embodiment of the invention. In this embodiment, the advanced persistent security component 3 is embedded in a user equipment 2 connected to a communication network 1, typically the Internet network.

**Figure 2** illustrates a high-level architecture of another embodiment of the invention. In this embodiment, the advanced persistent security component is split in a APS Analysis & blocking component 3a hosted on the network and an APS Logging component embedded in the user equipment 2. The network traffic between the UE 2 and the network 1 goes through the APS analysis & blocking component 3a working as a proxy.

**Figure 3** illustrates a more detailed architecture of an embodiment of the invention. A method and procedure have been devised that correlates information coming from: a DPI/DFI Analyser (DA) (11) that does in-depth analysis of the network packets and sessions with information coming from a User Logger (19) that captures human activity on the UE; a System Logger (20) that captures operating system events; and, an Application Logger (21) that determines what applications are running and captures application events.

The Advanced Network Firewall (ANF) (6) is a component that intercepts the network traffic received and sent by the UE (2) and transmits a copy of certain network packets to the DPI/DFI Analyser (DA) (11) that classifies them (i.e., detects the protocols, applications, and identifies the sessions), extracts the needed information (e.g., metadata and statistics from the network packets and sessions), analyses this data, and provides the information to the Event Correlation Engine (ECE) (29). It must be noted that the DA can analyse both encrypted or not encrypted traffic since to perform its analysis it can rely on non-encrypted packet headers, the destination and source IP addresses, the initial packets used to establish a session, and more evolved algorithms based on Machine Learning and statistics.

The User Logger (19) is a component that captures mainly keyboard and mouse activity. Possibly, it could also capture voice, video, gestures, and derive user sentiment. The User Analyser (23) then analyses this data and provides information indicating what text was written and what actions have been performed by the User.

The System Logger (20) is a component that analyses the logs produced by the operating system. The System Analyser (24) then analyses this data and provides the information indicating what actions have been performed by the system.

The Application Logger (21) is a component that detects what applications and services have been started, stopped or are running. It also captures the logs produced by certain applications. The Application Analyser (25) then analyses this data and provides information indicating what applications are running and what actions have been performed by the applications.

All these analysis components communicate information on the actions and events detected to the Event Correlation Engine (ECE) (29) through a communication bus (26a) or other means (e.g., sockets, files, shared memory, database). This engine acts as a Complex Event Processor that uses linear temporal logic to determine what actions (i.e., actions done by the user, the operation system or the applications) have provoked what network events. By network event we mean the transmission of a packet, or the creation of a communication session. For instance, when the user sends an electronic mail several sessions are created, one of the first being a session for issuing a request to a DNS (Domain Name System) server using the DNS protocol to resolve the domain name to an IP address. The correlation between user actions and network events done by the ECE produces what is referred to as the Verdicts (14). These Verdicts allow differentiating normal or authorised network activity that should be allowed, from abnormal or unwanted network activity that should be blocked.

The Verdicts (14) are used by the Advanced Network Firewall (ANF) (6), that acts as a Firewall, to block all unwanted network traffic or any activity not initiated or authorised by the User of the UE (2). The ANF (6) also makes it possible for the Users to decide what type of activity they would like to carry out at a given moment, blocking all other activity that is not necessary. This reduces the threat surface as would, for instance, if the User disconnects the UE from the network when using an application that does not require the network. The ANF (6) functions as a standard Firewall system but shares information with the DA (11) and the ECE (29), use the White and Black Lists (33) and the User Preferences (8) as input to determine what network traffic needs to be blocked, cached or transmitted.

Using web applications (e.g., opening a web page) or updating the operating system or applications can provoke many events in the network. To avoid considering all these events as unwanted, the method uses as input a set of rules consisting of a sequence of events referred to as Catalogue of Correlation Rules (CCR) (27) and a White list of IP addresses, that should be considered normal activity or allowed hosts for a given UE configuration. This catalogue of descriptions of network activity carried out by the system and applications used is provided as a service and maintained up-to-date.

The catalogue CCR (27) can be created by human experts or using a machine learning component called the Correlation Rule Generator (CRG) (99). By replacing the ECE (29) and the CCR (27) with the CRG component (99) we obtain a UE that is called a Reference UE. This Reference UE allows performing specific actions (e.g., normal activity related to the use of one application or service by a User) to determine the resulting network events generated, and derive the rules (27) that can be used by the ECE (29). This Reference UE is a UE configured to analyse, under controlled and protected conditions, the different activities that are typically done by the Users using a given version of the operating system and applications.

To deal with encrypted traffic, client-side encryption keys and certificates are provided to the DPI/DFI Analyser (DA) (11) to decrypt the network packets.

The main improvement introduced by the described method is to determine what entity (user, operating system, application, service) has triggered what network events so that instead of protecting a UE (2) by blocking only known attacks, it becomes possible to block all traffic that is not needed to carry out the activities the User requires at a given moment. This reduces the threat surface and opens the way for a more thorough protection against 0-day attacks and Advanced Persistent Threats (APT).

The described method does not need updated security rules and signatures for detecting known threats. It depends, on the other hand, on the updated information of what should be considered normal network activity originated by the applications or operating system being used. But this information does not change very often and is not so critical if not rapidly updated since it only prevents the new versions of the applications or operating system to perform activity that is usually related to checking for updates, checking licencing information, etc. The update of the normal network activity information, that shall be added to the Catalogue of Correlation Rules (CCR) (27), can be provided as a service to the users.

The process carried out by the described method to protect the users can be separated into a certain number of steps and procedures described by the following:
1. Incoming and outgoing network traffic is intercepted by the Advanced Network Firewall (ANF) (6) that transmits a copy of the network packets to the DPI/DFI Analyser (DA) (11). It first filters out traffic that does not need to be analysed in-depth (specified by White and Black lists, or the first three TCP session initialisation handshakes...). The DA (11) decrypts the traffic for analysis using the UE's certificates. Traffic that cannot be decrypted is identified by the DA (11) so that it can potentially be blocked by the ANF (6). The DA (11) classifies the network traffic and extract metadata and statistics needed for the correlation analysis. For this, it uses a list of rules, specified by the Filtering & Extraction Rules (10), which indicate what metadata and statistics need to be extracted from the network packets and sessions. These rules can be derived automatically from the Correlation Rules (27).
2. At the same time, the User Logger (19), the System Logger (20) and the Application Logger (21) captures activity going on inside the UE (2) and make it available to the corresponding Analysers: the User Analyser (23), the System Analyser (24) and the Application Analyser (25) via the Event Bus (22) (representing any communications means such as event bus, sockets, database, files, shared memory...). These Analysers analyse the activity and extract pertinent information. The type of information extracted may be for instance: the text entered by the User; computer mouse actions; certain operating system actions; applications or services stopped, started or running; and, certain application actions.
3. Step 1 and 2 can be performed in different machines, as shown in FIG. 2. The capture of the network traffic and the data from the Loggers (19, 20 and 21) need to be done in the UE (2); but, the analysis and extraction of the metadata and statistics can be done on a separate physical machine or a virtual machine in the cloud (3a). In this last case, the UE (2) needs to send the network traffic and data via a VPN tunnel to the APS Analysis & Blocking (3a) deployed as a cloud service. This tunnel allows the use of any communications means (e.g., event bus, sockets). The cloud service acts as a proxy and allow or block the incoming/outgoing network traffic.
4. Information provided by the previous steps is sent to the Event Bus (22) (representing any communications means such as event bus, sockets, database, files, shared memory...) so that the Event Correlation Engine (ECE) (29) can analyse it to determine what entity has provoked what network events. For this the ECE (29) uses a list of rules in the Catalogue of Correlation Rules (CCR) (27) that specify what network events are provoked by what activity. The ECE (29) then produces the Verdicts (14) that indicate to the Advanced Network Firewall (ANF) (6) which network packets should be allowed and which should be blocked.

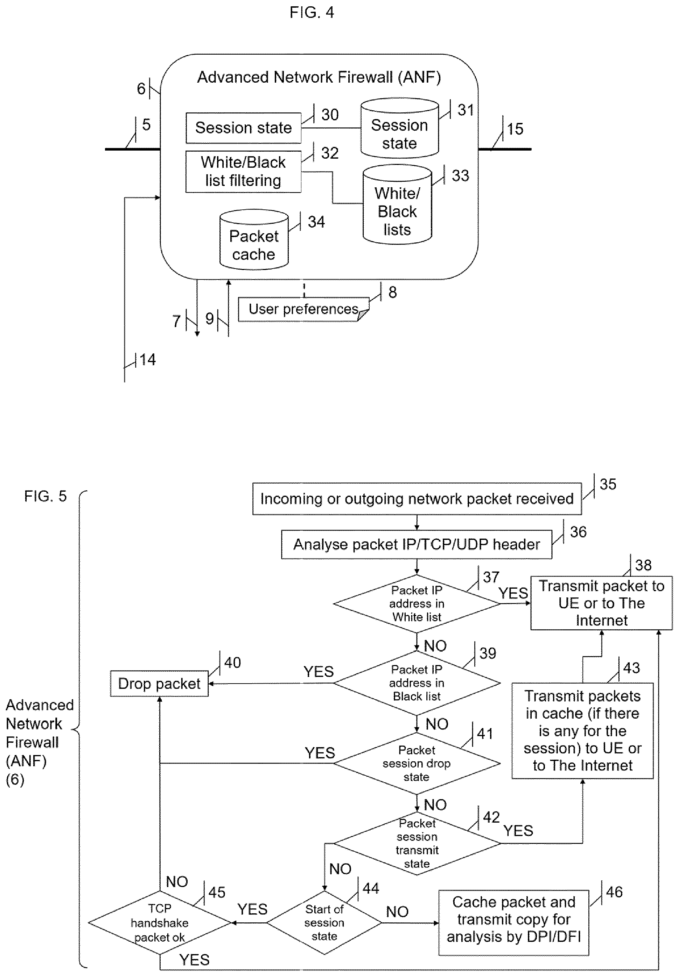

**Figure 4** illustrates a detailed view of an advanced network firewall according to an embodiment of the invention. It is a schematic representation of the Advanced Network Firewall (ANF) (6) component of the APS module (3). This component intercepts the network traffic coming in (5) or going out (15) of the UE (2) and block it if it corresponds to unwanted or unauthorized activity and depending on the User's preferences (8). For this, the ANF (6) inspects network packet headers to analyse: 1) the sessions using the Session state component (30); and, 2) the IP addresses to filter out or allow (32) certain packets. The ANF (6) also interacts with the DPI/DFI Analyser (DA) (11) and the Event Correlation Engine (ECE) (29). It either let a network packet pass, block it or cache it depending on the state of the session, in the database (31), to which the packet belongs. The packets that are allowed to pass are those belonging to the sessions that the ECE (29) has decided to let PASS, to the packets corresponding to a whitelisted IP address stored in a database (33), or to packets that should be allowed as defined by the User's preferences (8). The packets that are blocked are those belonging to the sessions that the ECE (29) has decided to BLOCK, to the packets corresponding to a blacklisted IP address stored in a database (33), or to packets that should be blocked as defined by the User's preferences (8). The packets that are cached are those belonging to a new session not yet analysed or those that are not part of any session (e.g., UDP packets). The headers of these packets are analysed first but, if this is not enough, then a copy is transmitted (7) to the DA (11) to be analysed in depth, i.e. using Deep Packet Inspection / Deep Flow Inspection (DPI/DFI) techniques. In some cases, the DA (11) indicates (9) to the ANF (6) that the session needs to be blocked, e.g., when the packet integrity is no good, the defragmentation is incorrect... The ECE (29) indicates (14) to the ANF (6) that the session needs to be allowed or blocked depending if the rules in the catalogue CCR (27) are satisfied or not.

**Figure 5** illustrates an example of flowchart of a method for filtering network traffic by an advanced network firewall in an embodiment of the invention. It is a flowchart showing the operations followed by the component Advanced Network Firewall (ANF) (6) to capture and analyse the network traffic coming in and going out of the UE (2). First, the Advanced Network Firewall (ANF) (6) captures the network packets (35) being sent of being received by the UE (2) by intercepting them. The packet header and payload are analysed succinctly (36) to determine if the packet needs to be analysed in depth or not. This is done using: the White list (37) that specifies the IP addresses of the packets that do not need to be further processed because they do not imply any potential risk; the Black list (39) that specifies the IP addresses of the packets that can be dropped because they are known to be malicious; and, the state of the session (41 and 42) they belong to. A session is defined by a quadruple composed of the values extracted from the header of a packet: IP address source and destination, and TCP port source and destination. The state of a session has been previously set by the DPI/DFI Analyser (DA) (11) or the Event Correlation Engine (ECE) (29). The state can either be BLOCK, meaning that the packets of the session can now be dropped (40), or PASS, meaning that the packets no longer need to be analysed and can be transmitted (43). If the session is a new session (44) then the initial packets of this session (45) can be transmitted if the TCP handshake is correct (38) or dropped (40) if the TCP handshake is incorrect. The network packets that need to be analysed (46) are cached, awaiting a decision from the DPI/DFI Analyser (DA) (11) or the Event Correlation Engine (ECE) (29), and a copy is made available (46) to the DPI/DFI Analyser (DA) (11) that analyses the packets in depth.

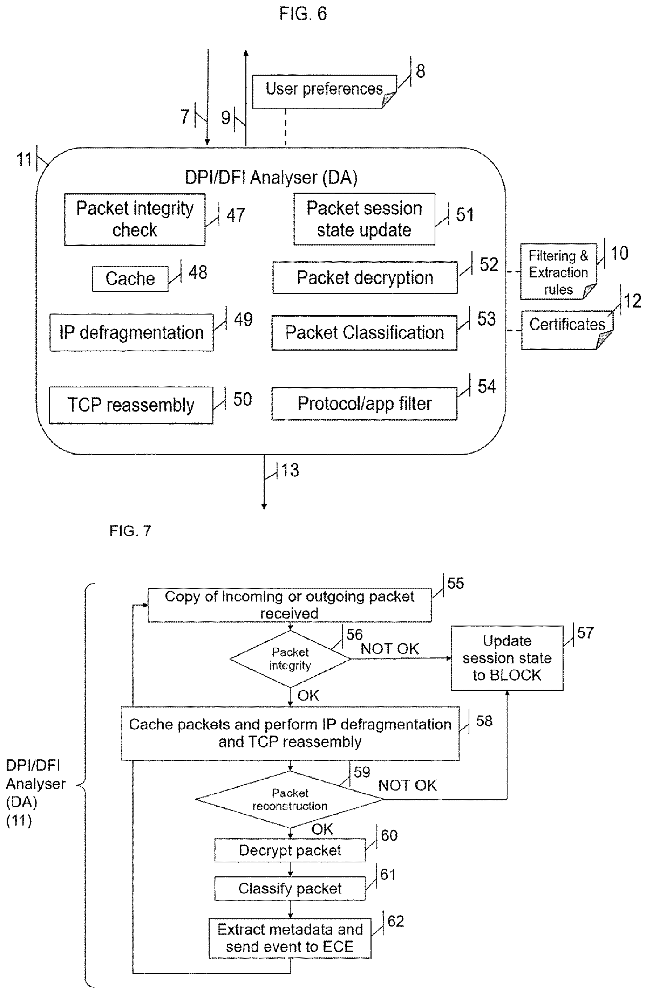

**Figure 6** illustrates the architecture of a DPI/DFI analyser in an embodiment of the invention. It is a schematic representation of the DPI/DFI Analyser (DA) (11) component of the APS module (3). This module analyses a copy of the network packets received (7) from the ANF (6). Depending on the User's preferences (8), it performs: an integrity check (47); cache (46) the packets for performing IP defragmentation (49) and TCP reassembly (50); decrypt packets (52) using the User's certificates (12); classify them (53); and, indicate (9) to the ANF (6) of any changes in packet session state (51) or any packets corresponding to a Filtering rule (10) (e.g., belonging to certain protocols or applications) that need to be filtered (54). The DA (11) also extracts metadata from the packets as defined in the Extraction rules (10) and send (13) this data to the ECE (29) for correlation.

**Figure 7** illustrates an example of flowchart of a method for analysing network traffic by a DPI/DFI analyser. It is a flowchart showing the operations followed by the component DPI/DFI Analyser (DA) (11) to analyse the network packet provided by the Advanced Network Firewall (ANF) (6). The DPI/DFI Analyser (DA) (11) first controls the integrity of the packet (56). If it is incorrect then the session state is set to BLOCK or else the packet is cached (58) to wait for the other packets needed do the IP defragmentation and TCP reassembly (58). If the fragmented packets are correctly reconstructed then they are decrypted (60) and classified (61). Classification means that the packet are analysed using Deep Packet Inspection techniques to determine the protocol to which it corresponds to. Once classified, the needed values are extracted from it (62) and sent to the ECE (29) for correlation.

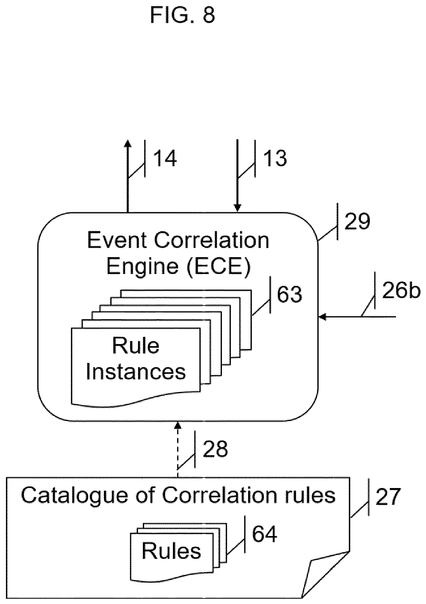

**Figure 8** illustrates the architecture of an event correlation engine in an embodiment of the invention. It is a schematic representation of the Event Correlation Engine (ECE) (29) component of the APS module (3). The ECE (29) receives the events provided by the Analysers, determines the activities that provoked the network events and generates a Verdict (14) indicating that the network events originated from normal or authorised activity within the UE (2) or can be considered abnormal or unwanted. Thus, the Verdict (14) produced provoke a change of the session state to BLOCK or PASS to be used by the ANF (6).

The ECE (29) correlates information from different sources (13 and 26b), referred to as events, using the correlation rules (64) in the catalogue CCR (27). The sources of information are the DPI/DFI Analyser (DA) (11), the User Logger (19), the System Logger (20) and the Application Logger (21). The rules are temporal logic rules based on a sequence of events in time. When the ECE (29) receives an event, it analyses the rules and create rule instances (if the event corresponds to the first event of a rule) or change the state of a rule instance (if the event corresponds to the next not yet satisfied event of the rule instance).

The Correlation Rules are based on linear temporal logic. The language used to specify the rules is XML but any formalism that allows specifying a sequence of events occurring in time would work. An event can be an occurrence of a network packet, a new log entry from the system or an application, a change detected in the system (e.g., launching of an application), a comprehensive action performed by the User, or a measurement performed periodically (e.g., CPU status).

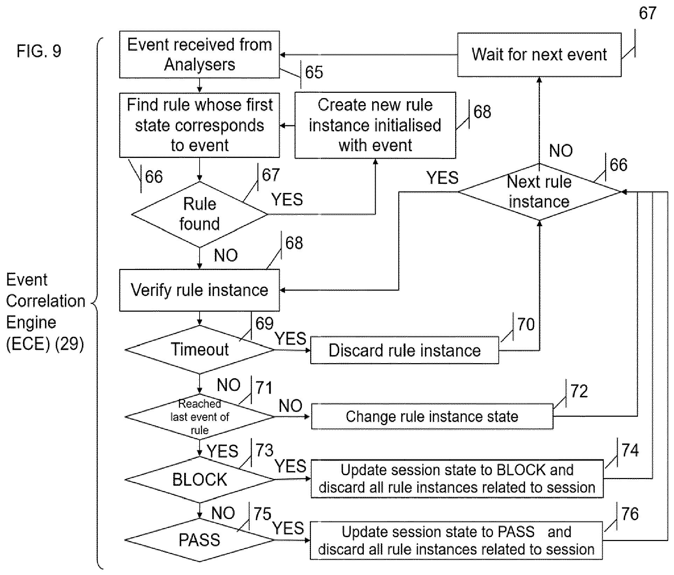

**Figure 9** illustrates an example of flowchart of a method for determining activities provoking a network event by an event correlation engine. It is a flowchart showing the operations followed by the component Event Correlation Engine (ECE) (29) to correlate the event information received from the other components (13, 26b). The ECE (29) receives the event information (65) and determine if it satisfies any first event of any of the rules (66). For each rule found, an instance of the rule is created that stores the fact that the first event of the rule has been satisfied. The ECE (29) then does the same operation for all the existing rule instances (68) to determine if the event received satisfies the next not yet satisfied event of the instance. The ECE (29) determines for each rule instance if there is a timeout condition or if the rule has reached its last event and thus has been satisfied or not. If the rule instance has reached a timeout condition (69) the rule instance is discarded (70). If the rule has not yet reached its last event (71) then the rule instance's state changes (72) (i.e., event is now valid for this rule instance). If the rule has reached the last event and the rule implies that the session should be blocked (73), then the rule instance is discarded and the session state is changed to BLOCK (74). If the rule has reached the last event and the rule implies that the session should be allowed (75), then the rule instance is discarded and the session state is changed to PASS (76). In this way, the event received is checked on all the rules and all the rule instances. Once done, the ECE (29) waits for another event.

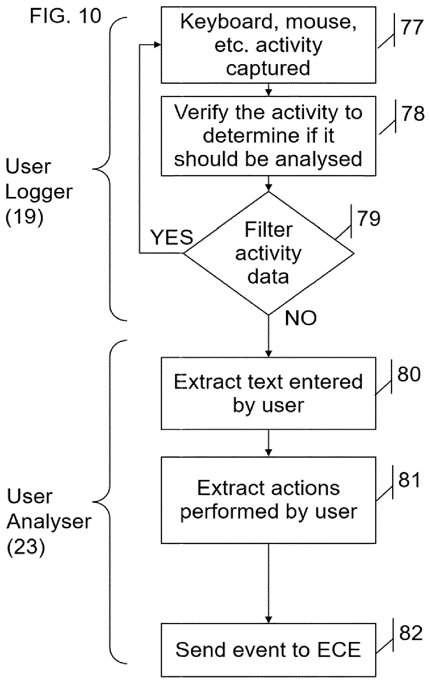

**Figure 10** illustrates an example of flowchart of a method for analysing user activities by a user logger and user analyser. It is a flowchart showing the operations followed by the components User Logger (19) and User Analyser (23) to capture and analyse the User activity within the UE (2). The keyboard, mouse and other user activity is captured (77). The captured activity is analysed to determine if it is to be further analysed or should be discarded (78). If it is filtered (79), the captured activity is discarded and the User Logger (19) waits for the next activity captured. If it is not filtered (79), the activity is analysed to reconstruct the text entered by the User (80), or determine the actions performed using the keyboard or mouse (81). A formatted report representing a comprehensive user action is sent (82) to the ECE (29) for processing.

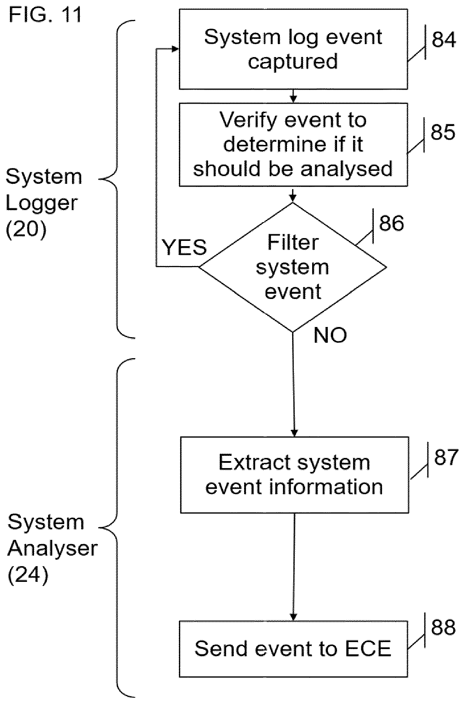

**Figure 11** illustrates an example of flowchart of a method for analysing system activities by a system logger and a system analyser. It is a flowchart showing the operations followed by the components System Logger (20) and System Analyser (24) to capture and analyse the system activity within the UE (2). Similar to the above components, the same procedure is followed (84 to 88) when capturing system activity. Here the information is extracted from the system logs (84), such as alerts and messages produced by the kernel, at the user-level, the mail system, the security components, the authorisation system, the printer pooling system, the network management, the applications installing/updating/uninstalling, etc. A formatted report representing a comprehensive system event is sent (88) to the ECE (29) for processing.

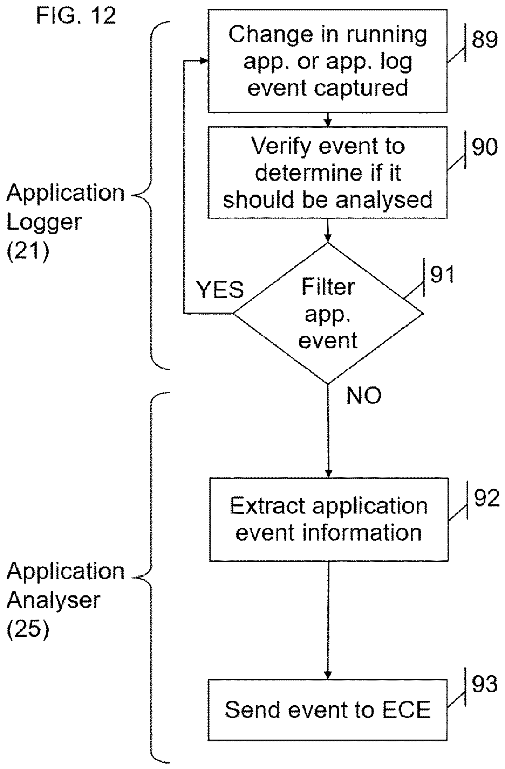

**Figure 12** illustrates an example of flowchart of a method for analysing application activities by an application logger and an application analyser. It is flowchart showing the operations followed by the components Application Logger (21) and Application Analyser (25) to determine applications that are started, stopped or running, and capture and analyse the application activity within the UE (2). Similar to the above components, the same procedure is followed (89 to 93) when capturing application activity (89). Here the information is extracted (89) from available common application logs (e.g., Apache, Tomcat, databases, installers) and from the information provided by the operating system on the status of the running applications (89). A formatted report representing a comprehensive application or service event is sent (93) to the ECE (29) for processing.

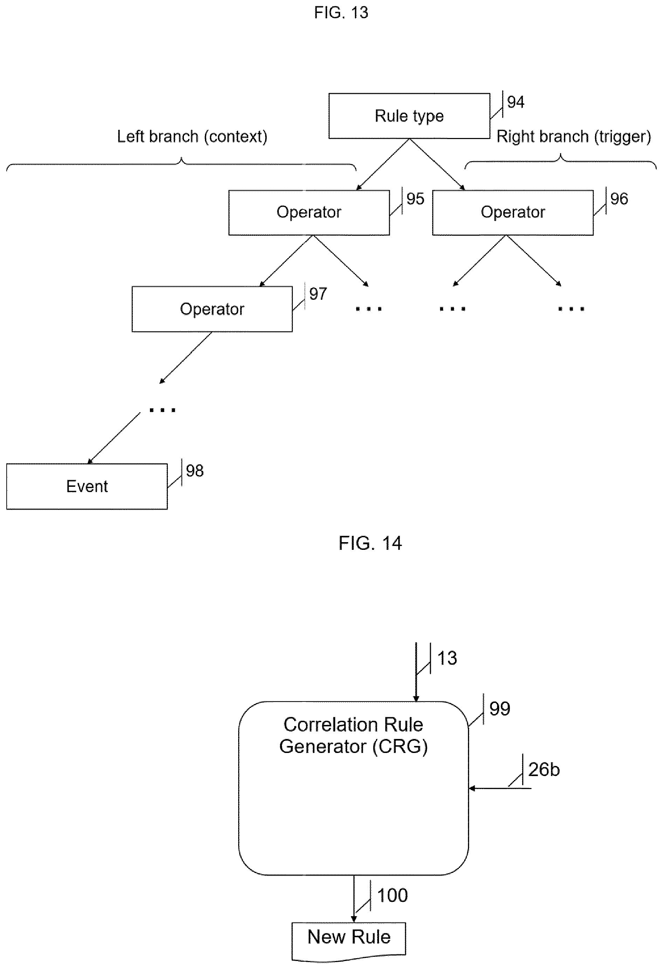

**Figure 13** illustrates an example of general ordered tree representing a correlation rule in an embodiment of the invention. It is a diagram representing an example of the XML structure of a rule where the rectangles (94-98) represent XML tags. The XML file can contain as many rules as required and could begin with a <beginning> tag and end with </beginning> tag. Each rule begins with a <rule> and ends with </rule> tag. A rule is a "general ordered tree" and can be graphically represented as shown in FIG. 13. The nodes of the rule tree are: the rule node (94) (required), operator nodes (95-97) (optional) and event nodes (98) (required). The rule node is forcibly a root node (94), and the event nodes are forcibly leaf nodes (98). A rule is a tree and each root has two branches: the left branch representing the context of the rule and the right branch representing the trigger. Each operator node has one or more branches depending on the operator type. The rule is found valid when the context and trigger are found valid; but the trigger is checked only if the context is already found valid. Two types of rules exist: rules that need to be satisfied and rules that should not be satisfied.

To illustrate how a rule can be specified in XML, a simplified instance of the FIG. 13 gives:

```
 <rule delay_units ="s" delay ="(0,2]" rule _id ="1"
       type_ rule ="Should_be_satisfied"
       description ="Description of attack">
       <operator value =" THEN " delay_units ="s" delay ="(0,1]" >
             <event event _id ="1"
             description ="Description of event 1"
             boolean_expression ="expression allowing to detect event 1"/>
             <event event _id ="2" description ="Description of event 2"
             boolean_expression ="expression allowing to detect event 2"/>
       </ operator >
       <event event _id ="3" description ="description of event 3"
       boolean_expression ="expression allowing to detect event 3"/>
 </rule>
```

A description of the nodes follows.

The rule node (94) is required and indicates that the context corresponding to the occurrence of one or more events needs to be verified. If it is verified then the trigger needs to be verified in a certain time interval for the rule to be satisfied. Time values can be 0 or a positive integer representing the units of time defined. If the time runs out before detecting the events concerned then we are in a TIMEOUT condition, i.e., the context occurs but the trigger never arrived in the specified time interval. This would mean that the property failed or not, depending on the type_rule (i.e., "should be satisfied" or "should not be satisfied"). If the rule is satisfied or not then an action (e.g., execution of a function or a script) can be specified that is automatically executed. Rule (94) and event nodes (98) need to be identified with a unique id number and a description.

The operator nodes (95-97) are optional and allow constructing complex rules. The type of operators is, for instance, "THEN", "OR", "AND", or "NOT". Operators are used to combine different events and build complex events. The "THEN" operator is used to describe ordered events, the "AND" operator is used to describe two or more events that need to be satisfied without any order, the "OR" operator is used to describe the occurrence of at least one of the events, and the "NOT" negates the underlying sub-tree. As for the rule node, the operator nodes are defined with respect to a time interval. Time values can be 0, a positive integer, or a negative integer representing the units of time defined. If the time value is negative then this refers to events in the past. For instance, if we have event 1 THEN event 2 with the time interval [-2, 0) where the time unit is seconds (i.e., s), this means that event 2 should occur at most 2 seconds before event 1. If the time intervals are not respected by the events concerned than we are in a TIMEOUT condition meaning that the branch is not satisfied.

The event nodes (98) are required (i.e., at least one event is required in the rule). These nodes allow specifying the conditions that need to be satisfied so that the occurrence of the event is valid in the rule. The conditions are expressed using a Boolean expression, similar to a Boolean expression in the C language. A Boolean expression is a logical combination of data, metadata and statistics related to the event (e.g., data from a log entry or message, network packet field value or packet metadata, computed statistics at a given moment) and of constant values (e.g., numbers, text). The Boolean expression can also combine data from an event in the rule (identified through its event id) that occurred in the past or even one that will occur in the future. It the expression includes data that will be obtained in the future then the expression will be resolved completely only when this event occurs. The Boolean expression can also combine the result from the execution of a function or script that takes constant values and event data (of current, future or past event) as parameters.

**Figure 14** illustrates the architecture of correlation rule generator in an embodiment of the invention. It is a schematic representation of the Correlation Rule Generator (CRG) (99) module that can analyse, under controlled conditions, events provided by the analysers (13 and 26b) to generate rules (100) that define what network traffic is produced by what User activity.

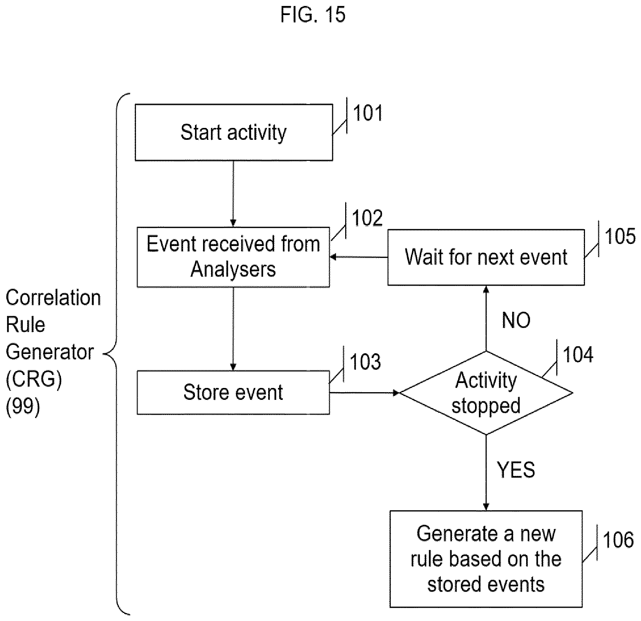

**Figure 15** illustrates an example of flowchart of a method for deriving rules by a correlation rule generator. It is a flowchart showing the operations followed by the Correlation Rule Generator (CRG) (99) component that is able to derive rules from a Reference UE (2) from controlled normal activity carried out on the UE. To generate a New Correlation Rule (100), the different components need to be installed in a Reference UE (2) that is a given configuration of a UE, i.e., running a given version of an operating system and a given version of an application for which one would like to define the rules representing normal or authorised activities.

The operations in FIG. 15 need to be triggered by a human user that would like to create new rules. An expert user must first define an activity (e.g., a specific task performed using an application or service) that should be analysed. Then the expert user performs this activity (101) until it is finished (104). During this time, the system captures the events (103) (corresponding to network, user, application and system events), waits for the next event (105) and stores the events (103). Once the activity has stopped (104) the Correlation Rule Generator (CRG) (99) analyses the stored events (106) and produces one or more Correlation Rules (100). These are analysed by the expert user, and modified or optimised, if necessary.

The events generated by normal activity can include network and system events that are not related to the activity of the user, system or the applications for which a rule or a set of rules are being defined. These unwanted events can be referred to as noise. This noise needs to be filtered out when deriving the rules so that the rules precisely identify the correlation between the user/system/application and network activity and effectively identify what network activity was generated by a specific user, system or application activity (identified as SUSA activities in the following). How this is done is explained below.

By capturing network traffic that contains traffic generated by a SUSA activity, and doing this several times, we obtain datasets that can be used for performing data mining to determine what traffic is generated by what activity. In this way, it is possible to automatically identify the rules that can be used to identify the part of network traffic generated by the SUSA activity. These rules can be inferred directly from the datasets using Associative Rule Mining (ARM).

ARM is a technique that can be used for discovering different relations between items in the datasets. Items here correspond to occurrences of network packets, protocols and sessions types characterised by a set of pre-determined features and statistics (e.g., packet attributes, packet length, protocol types, session characteristics, interpacket delays). It is an unsupervised technique (i.e., no labelled dataset is needed for training) whose goal is to search for relations or associations between items in the datasets based on some metric thresholds. In case of a SUSA action generating particular network traffic contained in the datasets, but mingled with other network events, association rules are able to catch this repeating network traffic part and omit the variable noise by checking for dependencies between one item and another. To determine the association between items in the datasets, there are several metrics that are used, such as: how frequently does the item appears in the set of datasets; how often is the rule between two items true; what is the probabilistic dependency between items; and what is the frequency that an association rule is incorrect. Then, an algorithm for generating the rule that allows determining what network events correspond to the specific SUSA action is used. This algorithm consists in analysing the packet and session features and identifying the packets and sessions with these features that appear in all datasets. To avoid the risk of including spurious associations (in other words, including items that occur frequently in the data but are not due to the specific SUSA action being analysed), we use an original method that consists in the following steps. First, we capture datasets produced without the specific SUSA action (i.e., obtain non-SUSA datasets). Second, we analyse these datasets in the same way as described above to identifying the packets and sessions with the same features appearing in all non-SUSA datasets. Finally, we use this information to eliminate spurious associations when we analyse the SUSA datasets.

The process described above needs to be done for each SUSA activity that should be considered normal or allowed. Once the rules are obtained, they can be optimised and can be used to analyse network traffic during operation: separating normal or allowed network traffic triggered by SUSA activity from abnormal traffic triggered by untrusted or unauthorised activities in the endpoint. The process needs to be repeated if the configuration of the endpoint changes (e.g., a new application that generates network traffic is installed, the operating system is updated) or when the user activity changes.

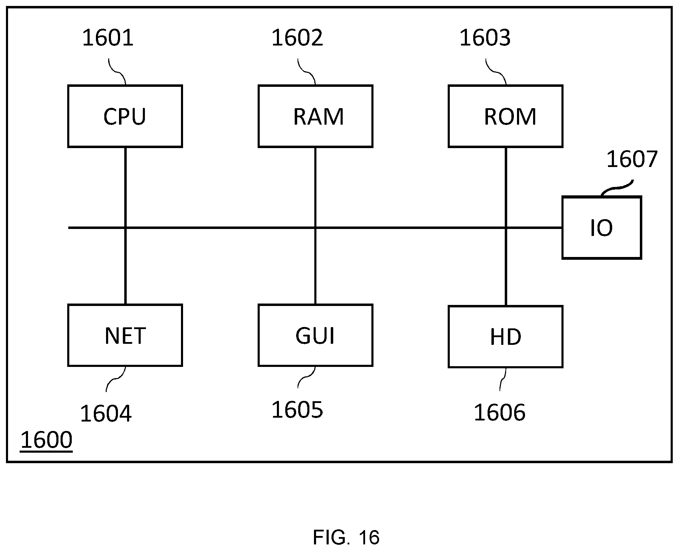

**Figure 16** is a schematic block diagram of a computing device **1600** for implementation of one or more embodiments of the invention. The computing device **1600** may be a device such as a micro-computer, a workstation or a light portable device. The computing device **1600** comprises a communication bus connected to:
- a central processing unit **1601,** such as a microprocessor, denoted CPU;
- a random access memory **1602,** denoted RAM, for storing the executable code of the method of embodiments of the invention as well as the registers adapted to record variables and parameters necessary for implementing the method according to embodiments of the invention, the memory capacity thereof can be expanded by an optional RAM connected to an expansion port for example;
- a read only memory **1603,** denoted ROM, for storing computer programs for implementing embodiments of the invention;
- a network interface **1604** is typically connected to a communication network over which digital data to be processed are transmitted or received. The network interface **1604** can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU **1601;**
- a graphical user interface **1605** may be used for receiving inputs from a user or to display information to a user;
- a hard disk **1606** denoted HD may be provided as a mass storage device;
- an I/O module **1607** may be used for receiving/sending data from/to external devices such as a video source or display.

The executable code may be stored either in read only memory **1603,** on the hard disk **1606** or on a removable digital medium such as for example a disk. According to a variant, the executable code of the programs can be received by means of a communication network, via the network interface **1604,** in order to be stored in one of the storage means of the communication device **1600,** such as the hard disk **1606,** before being executed.

The central processing unit **1601** is adapted to control and direct the execution of the instructions or portions of software code of the program or programs according to embodiments of the invention, which instructions are stored in one of the aforementioned storage means. After powering on, the CPU **1601** is capable of executing instructions from main RAM memory **1602** relating to a software application after those instructions have been loaded from the program ROM **1603** or the hard-disc (HD) **1606** for example. Such a software application, when executed by the CPU **1601,** causes the steps of the flowcharts of the invention to be performed.

Any step of the algorithms of the invention may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

Each of the embodiments of the invention described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of filtering network traffic to and from a computer device connected to a communication network, the method comprising:
- analysing operating system activity continuously by capturing operating system events;
- analysing application activity continuously by determining what applications are running and capturing application events;
- analysing network traffic to and from the computer device by doing in-depth analysis of the network packets and sessions;
- detecting network events associated with the network traffic based on the network traffic analysis;
- determining a verdict associated with each network event indicating whether the network event is legitimate based on the operating system and application analysis;
- filtering the network traffic based on the verdict of associated network events;
- wherein the method further comprises analysing user activity continuously, the in-depth analysis of the network packets and sessions comprising information coming from the user activity analysis;
- wherein the determination of the verdict is further based on a list of rules consisting of a sequence of events and a white list of IP addresses representing normal activity and allowed hosts; and
- wherein the verdict is further determined based on the user activity analysis.

2. The method of claim 1, wherein analysing user activity continuously comprises:
- capturing user activity by a User Logger component; and
- analysing the captured user activity by a User Analyser component.

3. The method of claim 1 or 2, wherein the verdict is determined by an Event Correlation Engine component based on the detected network events and the operating system, application, and user activity analysis.

4. The method of claim 3, wherein the Event Correlation Engine component is based on a set of correlation rules.

5. The method of claim 4, wherein the correlations rules are based on linear temporal logic.

6. The method of claim 5, wherein the correlation rules can be generated automatically using a correlation rule generator.

7. A computer program product for a programmable apparatus, the computer program product comprising a sequence of instructions for implementing a method according to any one of claims 1 to 6, when loaded into and executed by the programmable apparatus.

8. A computer-readable storage medium storing instructions of a computer program for implementing a method according to any one of claims 1 to 6.

9. A device (1600) for filtering network traffic to and from a computer device connected to a communication network, the device comprising a processor configured for:
- analysing operating system activity continuously by capturing operating system events;
- analysing application activity continuously by determining what applications are running and capturing application events;
- analysing network traffic to and from the computer device by doing in-depth analysis of the network packets and sessions;
- detecting network events associated with the network traffic based on the network traffic analysis;
- determining a verdict associated with each network event indicating whether the network event is legitimate based on the operating system and application analysis;
- filtering the network traffic based on the verdict of associated network events;
- wherein the method further comprises analysing user activity continuously, the in-depth analysis of the network packets and sessions comprising information coming from the user activity analysis;
- wherein the determination of the verdict is further based on a list of rules consisting of a sequence of events and a white list of IP addresses representing normal activity and allowed hosts; and
- wherein the verdict is further determined based on the user activity analysis.

## Patentansprüche

1. Verfahren zum Filtern von Netzwerkverkehr zu und von einer Computervorrichtung, die mit einem Kommunikationsnetzwerk verbunden ist, wobei das Verfahren Folgendes umfasst:
- kontinuierliches Analysieren der Betriebssystemaktivität durch Erfassen von Betriebssystemereignissen;
- kontinuierliches Analysieren der Anwendungsaktivität durch Ermitteln, welche Anwendungen ausgeführt werden, und Erfassen von Anwendungsereignissen;
- Analysieren des Netzwerkverkehrs zu und von der Computervorrichtung durch gründliches Analysieren der Netzwerkpakete und -sitzungen;
- Erkennen von Netzwerkereignissen, die mit dem Netzwerkverkehr basierend auf der Netzwerkverkehrsanalyse verbunden sind;
- Bestimmen eines mit jedem Netzwerkereignis verbundenen Urteils, das angibt, ob das Netzwerkereignis basierend auf der Betriebssystem- und Anwendungsanalyse legitim ist;
- Filtern des Netzwerkverkehrs basierend auf dem Urteils über verbundene Netzwerkereignisse;
- wobei das Verfahren ferner das kontinuierliche Analysieren der Nutzeraktivität umfasst, wobei das gründliche Analysieren der Netzwerkpakete und -sitzungen Informationen umfasst, die aus der Nutzeraktivitätsanalyse stammen;
- wobei die Bestimmung des Urteils ferner auf einer Liste von Regeln basiert, die aus einer Abfolge von Ereignissen und einer weißen Liste von IP-Adressen besteht, die normale Aktivität und zulässige Hosts repräsentieren; und
- wobei das Urteil ferner basierend auf der Nutzeraktivitätsanalyse bestimmt wird.

2. Verfahren nach Anspruch 1, wobei das kontinuierliche Analysieren der Nutzeraktivität Folgendes umfasst:
- Erfassen der Nutzeraktivität durch eine Nutzerlogger-Komponente; und
- Analysieren der erfassten Nutzeraktivität durch eine Nutzeranalyse-Komponente.

3. Verfahren nach Anspruch 1 oder 2, wobei das Urteil durch eine Ereigniskorrelationsengine-Komponente basierend auf den erfassten Netzwerkereignissen und der Analyse des Betriebssystems, der Anwendung und der Nutzeraktivität bestimmt wird.

4. Verfahren nach Anspruch 3, wobei die Ereigniskorrelationsengine-Komponente auf einer Reihe von Korrelationsregeln basiert.

5. Verfahren nach Anspruch 4, wobei die Korrelationsregeln auf einer linearen zeitlichen Logik basieren.

6. Verfahren nach Anspruch 5, wobei die Korrelationsregeln mithilfe eines Korrelationsregelgenerators automatisch generiert werden können.

7. Ein Computerprogrammprodukt für eine programmierbare Einrichtung, wobei das Computerprogrammprodukt eine Folge von Befehlen zum Umsetzen eines Verfahrens nach einem der Ansprüche 1 bis 6 umfasst, wenn es in die programmierbare Einrichtung geladen und von dieser ausgeführt wird.

8. Computerlesbares Speichermedium, das Anweisungen eines Computerprogramms zur Umsetzung eines Verfahrens nach einem der Ansprüche 1 bis 6 speichert.

9. Vorrichtung (1600) zum Filtern von Netzwerkverkehr zu und von einer Computervorrichtung, das mit einem Kommunikationsnetzwerk verbunden ist, wobei die Vorrichtung einen Prozessor umfasst, der zu Folgendem konfiguriert ist:
- kontinuierliches Analysieren der Betriebssystemaktivität durch Erfassen von Betriebssystemereignissen;
- kontinuierliches Analysieren der Anwendungsaktivität durch Ermitteln, welche Anwendungen ausgeführt werden, und Erfassen von Anwendungsereignissen;
- Analysieren des Netzwerkverkehrs zu und von der Computervorrichtung durch gründliches Analysieren der Netzwerkpakete und -sitzungen;
- Erkennen von Netzwerkereignissen, die mit dem Netzwerkverkehr basierend auf der Netzwerkverkehrsanalyse verbunden sind;
- Bestimmen eines mit jedem Netzwerkereignis verbundenen Urteils, das angibt, ob das Netzwerkereignis basierend auf der Betriebssystem- und Anwendungsanalyse legitim ist;
- Filtern des Netzwerkverkehrs basierend auf dem Urteils über verbundene Netzwerkereignisse;
- wobei das Verfahren ferner das kontinuierliche Analysieren der Nutzeraktivität umfasst, wobei das gründliche Analysieren der Netzwerkpakete und -sitzungen Informationen umfasst, die aus der Nutzeraktivitätsanalyse stammen;
- wobei die Bestimmung des Urteils ferner auf einer Liste von Regeln basiert, die aus einer Abfolge von Ereignissen und einer weißen Liste von IP-Adressen besteht, die normale Aktivität und zulässige Hosts repräsentieren; und
- wobei das Urteil ferner basierend auf der Nutzeraktivitätsanalyse bestimmt wird.

## Revendications

1. Procédé de filtrage du trafic de réseau vers et depuis un dispositif informatique connecté à un réseau de communication, le procédé comportant :
- l'analyse en continu de l'activité du système d'exploitation en capturant des événements du système d'exploitation ;
- l'analyse en continu de l'activité des applications en déterminant quelles applications sont en cours d'exécution et en capturant des événements d'application ;
- l'analyse du trafic de réseau vers et depuis le dispositif informatique en effectuant une analyse approfondie des paquets et sessions de réseau ;
- la détection d'événements de réseau associés au trafic de réseau sur la base de l'analyse du trafic de réseau ;
- la détermination d'un verdict associé à chaque événement de réseau indiquant si l'événement de réseau est légitime sur la base de l'analyse du système d'exploitation et des applications ;
- le filtrage du trafic de réseau sur la base du verdict d'événements de réseau associés ;
- dans lequel le procédé comporte en outre l'analyse en continu de l'activité de l'utilisateur, l'analyse approfondie des paquets et sessions de réseau comportant des informations provenant de l'analyse de l'activité de l'utilisateur ;
- dans lequel la détermination du verdict est en outre basée sur une liste de règles consistant en une séquence d'événements et une liste blanche d'adresses IP représentant une activité normale et des hôtes autorisés ; et
- dans lequel le verdict est en outre déterminé sur la base de l'analyse de l'activité de l'utilisateur.

2. Procédé selon la revendication 1, dans lequel l'analyse en continu de l'activité de l'utilisateur comporte :
- la capture de l'activité de l'utilisateur par un composant d'enregistreur de l'utilisateur ; et
- l'analyse de l'activité de l'utilisateur capturée par un composant d'analyse de l'utilisateur.

3. Procédé selon la revendication 1 ou 2, dans lequel le verdict est déterminé par un composant de moteur de corrélation d'événements sur la base des événements de réseau détectés et de l'analyse du système d'exploitation, des applications et de l'activité de l'utilisateur.

4. Procédé selon la revendication 3, dans lequel le composant de moteur de corrélation d'événements est basé sur un ensemble de règles de corrélation.

5. Procédé selon la revendication 4, dans lequel les règles de corrélation sont basées sur une logique temporelle linéaire.

6. Procédé selon la revendication 5, dans lequel les règles de corrélation peuvent être générées automatiquement à l'aide d'un générateur de règles de corrélation.

7. Produit programme d'ordinateur pour un appareil programmable, le produit programme d'ordinateur comportant une séquence d'instructions pour mettre en œuvre un procédé selon l'une quelconque des revendications 1 à 6, lorsqu'il est chargé dans l'appareil programmable et exécuté par celui-ci.

8. Support de stockage lisible par ordinateur stockant des instructions d'un programme informatique pour mettre en œuvre un procédé selon l'une quelconque des revendications 1 à 6.

9. Dispositif (1600) pour filtrer le trafic de réseau vers et depuis un dispositif informatique connecté à un réseau de communication, le dispositif comportant un processeur configuré pour :
- l'analyse en continu de l'activité du système d'exploitation en capturant des événements du système d'exploitation ;
- l'analyse en continu de l'activité des applications en déterminant quelles applications sont en cours d'exécution et en capturant des événements d'application ;
- l'analyse du trafic de réseau vers et depuis le dispositif informatique en effectuant une analyse approfondie des paquets et sessions de réseau ;
- la détection d'événements de réseau associés au trafic de réseau sur la base de l'analyse du trafic de réseau ;
- la détermination d'un verdict associé à chaque événement de réseau indiquant si l'événement de réseau est légitime sur la base de l'analyse du système d'exploitation et des applications ;
- le filtrage du trafic de réseau sur la base du verdict d'événements de réseau associés ;
- dans lequel le procédé comporte en outre l'analyse en continu de l'activité de l'utilisateur, l'analyse approfondie des paquets et sessions de réseau comportant des informations provenant de l'analyse de l'activité de l'utilisateur ;
- dans lequel la détermination du verdict est en outre basée sur une liste de règles consistant en une séquence d'événements et une liste blanche d'adresses IP représentant une activité normale et des hôtes autorisés ; et
- dans lequel le verdict est en outre déterminé sur la base de l'analyse de l'activité de l'utilisateur.
